Europäisches Patentamt

(19) European Patent Office

Office européen des brevets

(11) Numéro de publication: **0 153 228**
**B1**

(12) **FASCICULE DE BREVET EUROPÉEN**

(45) Date de publication du fascicule du brevet:
12.10.88

(51) Int. Cl.⁴: **C 01 F 17/00**

(21) Numéro de dépôt: **85400217.7**

(22) Date de dépôt: **11.02.85**

(54) **Oxyde cérique à nouvelles caractéristiques morphologiques et son procédé d'obtention.**

(30) Priorité: **20.02.84 FR 8402507**

(43) Date de publication de la demande:
**28.08.85 Bulletin 85/35**

(45) Mention de la délivrance du brevet:
**12.10.88 Bulletin 88/41**

(84) Etats contractants désignés:
**AT BE CH DE FR GB IT LI LU NL SE**

(56) Documents cité:
**FR-A-859 854**
**GB-A-488 008**
**SU-A-833 525**

**CHEMICAL ABSTRACTS, vol. 95, no. 22, novembre 1981, page 134, résumé no. 189463d, Columbus, Ohio, US; & SU - A - 833 525 (INSTITUTE OF GENERAL AND INORGANIC CHEMISTRY, ACADEMY OF SCIENCES, BELORUSSIAN S.S.R.) 30-05-1981**
**CHEMICAL ABSTRACTS, vol. 68, no. 19, 6 mai 1968, pages 8725-8726, résumé no. 90365d, Columbus, Ohio, US; G.V. TROFIMOV et al.: "Use of a solubility method to study a ceric oxide-sulfur trioxide-water system at 25, 50, 75, and 100 ", & ZH. NEORG. KHIM. 13(1), 260-6 (1968)**

(73) Titulaire: **RHONE- POULENC CHIMIE, 25, quai Paul Doumer, F-92408 Courbevoie Cédex (FR)**

(72) Inventeur: **Chane- Ching, Jean- Yves, 6, rue Vauvenargues, F-75018 Paris (FR)**
Inventeur: **Dumousseau, Jean- Yves, 60, rue des Dames, F-75017 Paris (FR)**

(74) Mandataire: **Dutruc- Rosset, Marie- Claude, RHONE- POULENC INTERSERVICES Service Brevets Chimie 25, Quai Paul Doumer, F-92408 Courbevoie Cédex (FR)**

**0 153 228**

## Description

La présente invention a pour objet un oxyde cérique à nouvelles caractéristiques morphologiques. Plus précisément, elle a trait à un oxyde cérique ayant une faible teneur en soufre. Elle concerne également le procédé d'obtention dudit oxyde cérique.

Dans l'exposé qui suit de l'invention, on entend par surface spécifique, la surface spécifique B.E.T. déterminée selon la méthode BRUNAUER - EMMETT - TELLER, décrite dans le périodique "The Journal of American Society 1938, 60, 309".

L'oxyde cérique seul ou en mélange avec d'autres oxydes métalliques est utilisé comme catalyseurs pour la synthèse notamment du méthanol [C.R. Séances Acad. Sci. ser. 2. 292 (12), 883-5 (1981)] ou dans des procédés de traitement des gaz résiduaires (demande de brevet japonaise n° 76/62 616).

Pour avoir une bonne réactivité catalytique, il est souhaitable de disposer d'un oxyde cérique ayant la plus grande surface spécifique possible.

Or jusqu'à présent, la plupart des procédés d'obtention d'oxyde cérique ne permettent pas d'atteindre ce résultat.

On connait par exemple, selon l'article de S. HORSLEY, J.M. TOWNER, M.B. WALDRON [Tirages Prelim. Symp. Eur. Metall. Poudres, 4 th. 1, paper 12, (1975)] un procédé de préparation d'oxyde de cérium IV par décomposition thermique de l'oxalate de cérium III. Le traitement thermique effectué à 450°C conduit a l'obtention d'un oxyde cérique n'ayant une surface spécifique que de 69 m2/g.

On peut également citer l'article de R. Sh. MIKHAIL, R.M. GABR et R.B. FAHIN [J. Appl. Chem. 20, 7, 222-225 (1970)] qui, s'intéressant à la structure de l'oxyde cérique, ont étudié les caractéristiques de l'oxyde cérique préparé par calcination de l'hydroxyde cérique obtenu par traitement d'une solution de nitrate céreux par l'ammoniaque en présence d'eau oxygénée. On remarque cependant que l'oxyde cérique obtenu par calcination à 400°C présente une surface spécifique seulement de 80 m2/g.

On peut également mentionner le brevet russe 833 525 qui décrit un oxyde cérique ayant une surface spécifique de 94 m2/g après calcination à 400°C et 72 m2/g après calcination à 600°C. Ledit oxyde est obtenu selon un procédé qui consiste à précipiter un hydroxyde de cérium à partir d'une solution de sel de cérium, à laver jusqu'à obtention d'un sol, à y ajouter du polyacrylamide, à séparer le précipité obtenu et à le calciner entre 400 et 700°C.

On a décrit dans le brevet américain US-A-2 327 992 un procédé de préparation de composés de cérium pur à partir d'un mélange d'hydroxydes trivalents de terres cériques qui consiste à oxyder le cérium en cérium IV, puis à effectuer un traitement par un acide faible ou dilué qui dissout les éléments trivalents seuls tandis que la presque totalité du cérium reste dans l'insoluble à l'état cérique. Le concentré cérique est séparé par filtration et lavage. Il est dissout dans l'acide nitrique, puis la solution est hydrolysée par l'eau bouillante, en présence d'une petite quantité d'acide sulfurique. Le précipité est séparé, lavé à l'eau, éventuellement calciné.

Ledit brevet ne décrit pas l'obtention d'oxyde cérique de grande surface spécifique, mais la préparation de composés de cérium pur, essentiellement un hydroxyde de cérium.

Enfin, on connait selon le brevet anglais GB-A-488 008 un procédé pour préparer un sulfate basique cérique qui consiste à additionner de l'eau à une solution contenant du sulfate cérique et pratiquement exempte de composés des métaux alcalins, à séparer le précipité obtenu, puis à le laver à l'aide d'acide dilué, à le sécher et éventuellement à le calciner. Le but poursuivi dans ledit brevet est de fournir un produit opacifiant et non pas un oxyde cérique de grande surface spécifique.

Par rapport à l'état de la technique, la présente invention a précisément pour but de fournir un procédé de préparation d'un oxyde cérique présentant une grande surface spécifique déterminée selon la méthode BET, c'est-à-dire au moins égale à 85 ± 5 m2/g.

Un autre objet de l'invention est, à titre de produits industriels nouveaux, un oxyde cérique présentant une surface spécifique déterminée selon la méthode BET d'au moins 130 m2/g après calcination à une température comprise entre 400°C et 500°C et de préférence entre 150 et 180 m2/g après calcination à une température comprise entre 400 et 450°C.

L'oxyde cérique selon l'invention présente la particularité de contenir une faible teneur en soufre qui se trouve sous la forme d'ions sulfate. On précisera ultérieurement, la quantité d'ions sulfate résiduelle dans l'oxyde cérique.

L'invention a également pour objet un procédé d'obtention d'un oxyde cérique présentant une surface spécifique déterminée selon la méthode BET d'au moins 85 ± 5 m2/g caractérisé par le fait qu'il consiste:
- à précipiter un sulfate basique cérique en faisant réagir une solution aqueuse de sel de cérium IV et une solution aqueuse contenant des ions sulfate: le rapport entre la concentration molaire en ions sulfate et la concentration finale équivalente en cérium IV varie entre 0,01 et 1,4,
- à filtrer le précipité obtenu,
- à le laver à l'aide d'une solution basique de telle sorte que la quantité résiduelle d'ions sulfate exprimée par le rapport molaire [SO4=]/[CeIV] soit inférieure à 0,3,
- éventuellement à sécher le précipité obtenu,
- à le calciner à une température comprise entre 300 et 500°C.

La demanderesse a trouvé d'une manière inattendue que l'obtention d'un oxyde cérique de grande surface spécifique était liée à la présence d'une quantité définie d'ions sulfate lors de la formation du précurseur d'oxyde cérique et au fait que la quantité résiduaire d'ions sulfate dans l'oxyde cérique obtenu soit minime.

2

**0 153 228**

Dans la première étape du procédé de l'invention, on réalise la préparation d'un sulfate basique cérique répondant à la formule $Ce(OH)_{4-x}(SO_4)_{x/2}$ dans laquelle x est supérieur à 0 et inférieur à 4.

A cet effet, on part d'une solution aqueuse de cérium IV qui peut être une solution aqueuse de nitrate cérique ou une solution aqueuse de nitrate cérique d'ammonium. Ladite solution peut contenir sans inconvénient du cérium à l'état céreux mais il est souhaitable pour avoir un bon rendement de précipitation qu'elle contienne au moins 85 % de cérium IV.

Le sel de cérium est choisi de telle sorte qu'il ne contienne pas d'impuretés qui puissent se retrouver, dans le produit final, après calcination. Il peut être avantageux de mettre en jeu un sel de cérium présentant un degré de pureté supérieure à 99 %.

La concentration de la solution de sel de cérium n'est pas un facteur critique, selon l'invention. Lorsqu'elle est exprimée en cérium IV, elle peut varier entre 0,3 et 2 moles par litre.

La solution aqueuse contenant les ions sulfate est préparée à partir d'un sulfate de métal alcalin, alcalino-terreux ou d'ammonium ou par barbotage dans l'eau d'un gaz contenant du soufre tel que, par exemple, l'anhydride sulfureux, l'anhydride sulfurique. On choisit de préférence le sulfate d'ammonium du fait que l'ion ammonium est éliminé facilement lors du traitement thermique du précipité. Il est préférable de mettre en oeuvre un sulfate d'ammonium présentant un degré de pureté supérieur à 99 %.

On peut également faire appel à l'acide sulfurique comme générateur d'ions sulfate dans la mesure où l'acidité apportée correspond ou est ajustée de telle sorte que l'on ait les conditions nécessaires à l'obtention du précipité recherché.

L'eau intervenant dans les solutions aqueuses de sel de cérium IV et de celle contenant les ions sulfate est, de préférence, de l'eau distillée ou permutée.

Le milieu réactionnel présente une acidité allant de $10^{-2}$ N jusqu'à 1 N, de préférence 0,1 N et 0,5 N.

L'acidité peut être apportée par le début de la réaction d'hydrolyse car la formation d'une mole d'hydrate d'oxyde cérique, est accompagnée par la libération de 4 protons.

L'acidité peut être apportée par ajout d'un acide minéral. D'une manière préférentielle, on choisit l'acide nitrique ou l'acide sulfurique. On peut utiliser un acide qui peut être concentré ou dilué, par exemple, jusqu'à $10^{-2}$ N.

Elle peut également provenir de la solution de nitrate cérique qui peut être légèrement acide et avoir une normalité variant entre 0,3 N et 5 N de préférence entre 0,3 N et 1 N.

La quantité d'ions sulfate ajoutée est telle que le rapport entre la concentration molaire en ions sulfate et la concentration finale équivalente en cérium IV varie entre 0,01 et 1,4 de préférence entre 0,3 et 0,4.

On définit la concentration finale équivalente en cérium IV par l'équation suivante:

$$[Ce^{IV} éq.] = \frac{[Ce^{IV} \times V']}{V + V'}$$

dans laquelle:
- $[Ce^{IV}]$ est la concentration en moles/litre de la solution de sel de cérium IV
- V représente le volume de la solution d'ions sulfate
- V' représente le volume de la solution de cérium IV.

La proportion entre la solution aqueuse de sel de cérium IV et la solution aqueuse d'ions culfate est telle que la concentration finale équivalente en cérium IV est comprise entre 0,2 et 1,0 mole/litre de préférence entre 0,3 et 0,6 mole/litre.

La précipitation de sulfate basique cérique réalisée dans les conditions telles que décrites précédemment est effectuée d'une manière préférentielle entre 70°C et jusqu'à la température de reflux du milieu réactionnel qui se situe vers 100°C.

Il est plus aisé de travailler à la température de reflux qui est facile à contrôler et à reproduire.

Selon un premier mode de réalisation pratique de l'invention, on commence à chauffer la solution aqueuse contenant les ions sulfate jusqu'à obtention de la température désirée choisie dans la zone prédéfinie.

On introduit alors, graduellement ou en continu la solution de sel de cérium IV: la durée d'addition de solution de sel de cérium IV est généralement comprise entre 1 heure et 4 heures. On se référera aux exemples pour l'illustration des débits d'addition de la solution de sel de cérium IV.

Après la fin de l'addition de ladite solution, on poursuit le chauffage jusqu'à précipitation complète du cérium IV sous la forme de son sulfate basique puis la masse réactionnelle est mûrie à cette même température avant l'opération de filtration. Dans ce cas le temps de mûrissement est choisi entre 2 et 24 heures: la borne supérieure ne présente aucun caractère critique. Toutefois un temps pouvant aller de 3 à 10 heures est généralement satisfaisant.

Selon une deuxième variante de réalisation de la première étape du procédé de l'invention, on mélange simultanément à la température ambiante la solution aqueuse de sel de cérium IV et la solution aqueuse contenant les ions sulfate et l'on chauffe le mélange obtenu jusqu'à obtention de la température désirée choisie dans la zone prédéfinie.

Une fois la température atteinte, on poursuit le chauffage jusqu'à précipitation complète du cérium IV sous la forme de son sulfate basique, puis la masse réactionnelle est murie dans les conditions décrites précédemment, généralement pendant 2 à 24 heures et de préférence entre 3 et 10 heures.

Il est à noter que ce mode de réalisation est préféré car il permet d'obtenir un oxyde cérique présentant la plus grande porosité.

3

La deuxième étape du procédé consiste à filtrer après réaction, la masse réactionnelle qui se présente sous la forme d'une suspension dont la température se situe entre 90°C et 100°C. Cette opération est effectuée avant ou après refroidissement de la masse réactionnelle à température ambiante c'est-à-dire entre 10°C et 25°C.

On peut éventuellement soumettre le gâteau de filtration à un lavage afin d'éliminer les ions nitrate adsorbés sur le précipité. Le lavage est opéré à l'eau de préférence distillée ou permutée dont la température peut varier indifféremment entre 5°C et 90°C. Ou effectue de un à plusieurs lavages et le plus souvent de un à trois lavages.

Le lavage peut être également réalisé à l'aide d'un solvant organique. On peut faire appel aux hydrocarbures aliphatiques, cycloaliphatiques ou aromatiques ou à des alcools aliphatiques ou cycloaliphatiques tels que le méthanol, l'éthanol, le n-propanol, l'isopropanol, le n-butanol, l'isobutanol, le néobutanol.

On effectue de un à plusieurs lavages et le plus souvent de un à trois lavages.

Après ce lavage, la teneur en eau du gâteau est comprise entre 20 et 80 % et généralement entre 20 et 50 %.

Indépendamment de ces lavages, il est nécessaire selon le procédé de l'invention d'effectuer un (autre) lavage à l'aide d'une solution basique afin de déplacer une partie des ions sulfate. D'une manière préférentielle, on fait appel à une solution aqueuse d'ammoniaque dont la concentration peut varier, par exemple, entre 0,1 N et 1 N.

On peut faire un voire-même dix lavages mais le plus souvent de un à quatre lavages.

Le produit obtenu après filtration et lavages successifs est ensuite séché à l'air ou sous pression réduite de l'ordre de $10^{-2}$ à 100 mm de mercure (1,33 à $1,33.10^4$ Pa). La temperature de séchage peut varier entre 90°C et 200°C et le temps de séchage n'est pas critique et peut être compris entre 10 et 48 heures.

Selon la dernière étape du procédé de l'invention, on calcine le produit séché à une température qui est de préférence choisie comme étant la température moyenne d'utilisation de l'oxyde cérique en tant que catalyseur.

La température de calcination est choisie entre 300°C et 500°C mais de préférence, entre 350°C et 450°C. Elle dure environ 30 minutes à 10 heures.

La borne inférieure définissant la gamme de température n'est pas critique et peut être abaissée.

Par contre, il n'y a pas intérêt à élever la limite supérieure de la température de calcination car l'on constate une chute de la surface spécifique de l'oxyde cérique obtenu. Par ailleurs, on précisera que l'oxyde cérique obtenu présente un maximum de surface spécifique de l'ordre de 150 à 180 m²/g après calcination à une température de 400°C à 450°C.

On recueille, après la calcination, l'oxyde cérique avec un très bon rendement puisqu'il représente lorsqu'il est exprimé en cérium IV de 80 à 98 % du cérium IV présent dans la solution de sel de cérium IV de départ.

Par ailleurs, il est à noter que le procédé de l'invention se prête tout-à-fait bien à sa mise en oeuvre en continu.

Le procédé de l'invention peut être mis en oeuvre dans un appareillage classique. L'étape de précipation du sulfate basique cérique s'effectue dans un réacteur équipé d'un dispositif de chauffage thermorégulé, des moyens usuels de contrôle de réaction (thermomètre), des moyens d'agitation (agitation à ancre ou à hélice), des moyens d'introduction des réactifs.

L'opération de mûrissement peut être conduite dans le réacteur ou bien dans un autre réacteur du même type: le passage de la masse réactionnelle d'un réacteur dans l'autre pouvant se faire par gravité ou à l'aide de pompes.

Ensuite, la filtration de la suspension obtenue peut être réalisée sur un filtre sous pression de gaz inerte tel que l'azote, sur un filtre sous pression réduite (Büchner, Nutche) ou bien sur un dispositif continu de filtration, par exemple, un filtre rotatif type Vernay ou un filtre à bande.

Le précipité est placé dans des nacelles en silice, porcelaine ou alumine puis soumis à l'opératicn de séchage qui peut être réalisée dans un dispositif quelconque de séchage, par exemple, dans une étuve ventilée ou maintenue sous pression réduite.

Il est ensuite soumis au traitement de calcination qui peut être effectué dans un four à chambre, tunnel, à moufles ou rotatif équipé d'un dispositif permettant de réguler la température au cours du traitement thermique.

Conformément au procédé de l'invention, on obtient un oxyde cérique contenant une certaine quantité d'ions sulfate dont la présence influence la surface spécifique obtenue.

La quantité d'ions sulfate résiduelle dépend de la quantité d'ions sulfate introduite au cours de la réaction de précipitation et du fait que lesdits ions ont été plus ou moins éliminés au cours des opérations de lavage, notamment au cours du lavage à l'ammoniaque.

On précisera dans le tableau suvant, à titre indicatif, les quantités d'ions sulfate résiduelles et les surfaces spécifiques obtenues selon que le précipité ait été ou non soumis à un lavage à l'ammoniaque et selon le nombre de lavages à l'ammoniaque: dans tous les cas la quantité d'ions sulfate ajoutée au cours de la précipitation exprimée par le rapport molaire $[SO_4^=]/[Ce^{IV}$ éq] étant de 0,36 et le précipité ayant été lavé une fois à l'eau puis calciné 6 heures à 400°C.

La quantité résiduelle d'ions sulfate dans l'oxyde cérique final est exprimée par le rapport molaire $[SO_4^=]/[Ce^{IV}]$.

|  | quantité d'ions sulfate résiduelle | surface spécifique de CeO$_2$ |
|---|---|---|
| sans lavage à l'ammoniaque | 0,30 | 60 à 120 m$^2$/g |
| avec 1 lavage à l'ammoniaque 0,4 N | 0,09 | 120 à 160 m$^2$/g |
| avec 4 lavages à l'ammoniaque 0,4 N | 0,0018 | 150 à 170 m$^2$/g |
| avec 10 lavages à l'ammoniaque 0,4 N | 0,0009 | 150 à 180m$^2$/g |

Compte-tenu des applications catalytiques de l'oxyde cérique obtenu, il est souhaitable que la quantité d'ions sulfate résiduelle soit telle que le rapport précédemment défini soit inférieur à 0,03. Il est choisi de préférence, inférieur à 0,002.

Encore plus préférentiellement, il y a intérêt à ce qu'il soit le plus proche de 0.

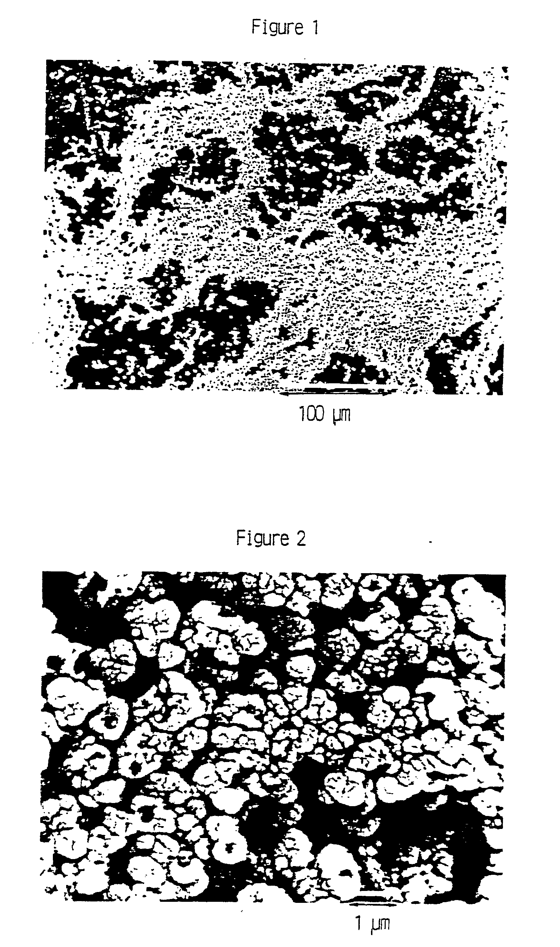

Les figures 1 et 2 représentent des photographies prises au microscope électronique à balayage (G = 300 et 12 000 = qui montrent, la morphologie de l'oxyde cérique obtenu selon l'invention.

On remarque que les particules d'oxyde cérique présentent des dimensions de pores ayant un diamètre moyen aux environs de 30 Å.

Les applications de l'oxyde cérique obtenu selon le procédé de l'invention sont très nombreuses. On peut citer notamment les applications en tant que charge, liant, washcoat, épaississant, dispersant, renforçateur, pigment, adsorbant et matière première pour la fabrication de céramiques et de compositions de polissage du verre.

L'oxyde cérique selon l'invention présente une grande surface spécifique si bien qu'il est bien adapté pour être utilisé dans le domaine de la catalyse, comme catalyseur ou comme support catalytique.

Il peut être employé comme catalyseur ou support de catalyseur pour effectuer diverses reactions telles que, par exemple: la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion.

L'oxyde cérique de l'invention peut être utilisé seul ou en mélange avec d'autres oxydes.

En raison de sa grande réactivité chimique, il peut être utilisé avantageusement pour l'élaboration de supports mixtes de catalyseurs, par exemple, Al$_2$O$_3$- MgO- CeO$_2$ (cf. demande de brevet japonaise n° 78/40 077).

On donne ci-après des exemples qui illustrent l'invention sans toutefois la limiter.

## EXEMPLE 1-

Dans un ballon tricol de 6 litres muni d'un thermomètre, d'un dispositif d'agitation, d'un système d'introduction de réactif (pompe doseuse), d'un réfrigérant ascendant et équipé d'un dispositif de chauffage, on introduit à température ambiante dans un ordre quelconque 1090 cm$^3$ d'eau permutée contenant 37,4 g de sulfate d'ammonium (NH$_4$)$_2$ SO$_4$ et 610 cm$^3$ d'une solution de nitrate cérique contenant 1,275 M/l de cérium IV, 0,025 M/l de cérium III et ayant une acidité libre de 0,365 N.

On obtient un mélange ayant une concentration finale équivalente en cérium IV égale à 0,465 M/l.

On porte ledit mélange à ébullition et l'on maintient le reflux pendant 24 heures.

On filtre le précipité sur verre fritté (porosité n° 3) et l'on effectue trois lavages avec de l'eau à 90°C.

On dose le cérium IV contenu dans les eaux-mères par titrage potentiométrique à l'aide d'une solution titrée de fer II ce qui permet de déterminer un rendement de précipitation de 96,3 %.

Avant la calcination, on effectue quatre lavages successifs avec une solution d'ammoniaque 0,4 N à 80°C.

On soumet ensuite le produit obtenu à un séchage a 105°C pendant 48 heures puis à une calcination dans un four à moufles 6 heures à 400°C.

On obtient un oxyde cérique contenant du sulfate en une proportion telle que le rapport molaire [SO$_4$=]/[Ce IV] est égal à 0,002.

Il présente une surface spécifique de 164 m$^2$/g.

L'oxyde cérique préparé selon l'invention présente une structure type fluorine c'est-à-dire cubique face centrée.

Le paramètre et l'intensité de la structure CaF$_2$ sont les suivants:

- paramètre de maille $\quad$ a $=5,435 \pm 0,01$ Å

- taux de cristallisation $\quad$ t $= 55$ %

Le paramètre de maille de l'oxyde cérique pur est de 5,411 Å (JCPDS 4 0593).
On note donc que la paramètre de maille est légèrement dilaté.


## EXEMPLE 2 -

Cet exemple met en évidence l'influence du lavage avec la solution d'ammoniaque sur la surface spécifique de l'oxyde cérique obtenu.
A cet effet, on reproduit l'exemple 1 à la seule différence que l'on supprime le lavage à l'ammoniaque.
La calcination est réalisée dans les mêmes conditions.
On obtient un oxyde cérique contenant du sulfate en une proportion telle que le rapport molaire $[SO_4=]/[Ce\ ^{IV}]$ est égal à 0,26.
Il présente une surface spécifique de 110 $m^2/g$.


## EXEMPLES 3 A 5 -

Ces exemples mettent en évidence l'influence de la concentration des ions $SO_4=$ du milieu réactionnel sur la surface spécifique de l'oxyde cérique obtenu.
On reproduit l'exemple 1 en faisant varier comme seul paramètre, la quantité de sulfate d'ammonium introduite dans le milieu réactionnel.
Le tableau suivant indique la surface spécifique de l'oxyde cérique obtenu après calcination à 400°C pendant 6 heures, en fonction des teneurs en $SO_4=$ du milieu d'hydrolyse. A titre comparatif, on a reporté le résultat obtenu selon l'exemple 1.

| n° d'exemples | quantité de sulfate d'ammonium introduite | surface spécifique de $CeO_2$ |
|---|---|---|
| 3 | 6,9 g | 80 $m^2/g$ |
| 1 | 37,4 g | 164 $m^2/g$ |
| 4 | 69,12 g | 122 $m^2/g$ |
| 5 | 137 g | 78 $m^2/g$ |


## EXEMPLE 6 -

Dans cet exemple, on utilise une solution de nitrate cérique et une solution aqueuse contenant les ions sulfates de compositions identiques à celles décrites à l'exemple 1.
L'étape de précipitation du sulfate basique est conduite en additionnant avec un débit de 203,3 $cm^3/h$ la solution de nitrate cérique à la solution aqueuse contenant les ions sulfates préalablement portée au reflux. Après la fin de l'addition de ladite solution, on effectue un mûrissement de la masse réactionnelle de 3 heures à la température de reflux.
On réalise sur le sulfate basique obtenu des étapes de filtration, séchage et calcination identiques à celles décrites à l'exemple 1.
L'oxyde cérique ainsi fabriqué présente bien une surface spécifique élevée de l'ordre de 160 $m^2/g$ mais présente un volume poreux plus faible que celui obtenu à l'exemple 1.


## Revendications

1. Procédé d'obtention d'un oxyde cérique présentant une surface spécifique déterminée selon la méthode BET d'au moins 85 $\pm$ 5 $m^2/g$ caractérisé par le fait qu'il consiste:
- à précipiter un sulfate basique cérique en faisant réagir une solution aqueuse de sel de cérium IV et une solution aqueuse contenant des ions sulfate: le rapport entre la concentration molaire en ions sulfate et la concentration finale équivalente en cérium IV varie entre 0,01 et 1,4,
- à filtrer le précipité obtenu,
- à le laver à l'aide d'une solution basique de telle sorte que la quantité résiduelle d'ions sulfate exprimée par le rapport molaire $[SO_4^=]/[Ce^{IV}]$ soit inférieure à 0,3,
- éventuellement à sécher le précipité obtenu,
- à le calciner à une température comprise entre 300 et 500°C.

2. Procédé selon la revendication 1 caractérisé par le fait que la solution de sel de cérium IV est une solution aqueuse de nitrate cérique ou une solution aqueuse de nitrate cérique d'ammonium.

3. Procédé selon l'une des revendications 1 et 2 caractérisé par le fait que la concentration de la solution de sel de cérium exprimée en cérium IV est comprise entre 0,3 et 2 moles par litre.

4. Procédé selon la revendication 1 caractérisé par le fait que la solution aqueuse contenant des ions sulfate est une solution de sulfate de métal alcalin, alcalino-terreux ou d'ammonium ou est obtenue par barbotage dans l'eau d'un gaz contenant du soufre.

5. Procédé selon la revendication 4 caractérisé par le fait que ladite solution est une solution de sulfate d'ammonium.

6. Procédé selon la revendication 1 caractérisé par le fait que la solution aqueuse contenant des ions sulfate est une solution aqueuse d'acide sulfurique.

7. Procédé selon l'une des revendications 1 à 6 caractérisé par le fait que l'eau intervenant dans les solutions aqueuses de sel de cérium IV et celle contenant les ions sulfate est de l'eau distillée ou permutée.

8. Procédé selon l'une des revendications 1 à 7 caractérisé par le fait que le milieu réactionnel présente une acidité allant de $10^{-2}$ jusqu'à 1 N.

9. Procédé selon la revendication 8 caractérisé par le fait que le milieu réactionnel présente une acidité comprise entre 0,1 et 0,5 N.

10. Procédé selon l'une des revendications 8 et 9 caractérisé par le fait que l'acidité peut être apportée par le début de la réaction d'hydrolyse.

11. Procédé selon l'une des revendications 8 et 9 caractérisé par le fait que l'acidité est apportée par de l'acide nitrique ou de l'acide sulfurique.

12. Procédé selon l'une des revendications 8 et 9 caractérisé par le fait que l'acidité est apportée par une solution de nitrate cérique ayant une acidité de 0,3 à 5 N.

13. Procédé selon la revendication 12 caractérisé par le fait que la solution de nitrate cérique a une acidité de 0,3 à 1 N.

14. Procédé selon l'une des revendications 1 à 13 caractérisé par le fait que la quantité d'ions sulfate ajoutée est telle que le rapport entre la concentration molaire en ions sulfate et la concentration finale équivalente en cérium IV varie entre 0,3 et 0,4.

15. Procédé selon l'une des revendications 1 à 14 caractérisé par le fait que la proportion entre la solution aqueuse de sel de cérium IV et la solution aqueuse d'ions sulfate est telle que la concentration finale équivalente en cérium IV est comprise entre 0,2 et 1,0 mole/litre.

16. Procédé selon la revendication 15 caractérisé par le fait que la concentration équivalente en cérium IV est comprise entre 0,3 et 0,6 mole/litre.

17. Procédé selon l'une des revendications 1 à 16 caractérisé par le fait que la température du milieu réactionnel est comprise entre 70°C et 100°C environ.

18. Procédé selon la revendication 17 caractérisé par le fait que la température du milieu réactionnel est la température de son reflux.

19. Procédé selon l'une des revendications 1 à 18 caractérisé par le fait que l'on porte la solution aqueuse contenant les ions sulfate à la température du milieu reactionnel et que l'on introduit graduellement ou en continu la solution de sel de cérium IV.

20. Procédé selon la revendication 19 caractérisé par le fait que la durée d'addition de la solution de sel de cérium IV est comprise entre 1 heure et 4 heures.

21. Procédé selon l'une des revendications 1 à 20 caractérisé par le fait que l'on mélange simultanément la solution aqueuse de sel de cérium IV et la solution aqueuse contenant les ions sulfate et l'on chauffe le mélange obtenu jusqu'à obtention de la température réactionnelle.

22. Procédé selon l'une des revendications 19 à 21 caractérisé par le fait que l'on opère le mûrissement de la masse réactionnelle avant l'opération de filtration en maintenant la température du milieu réactionnel pendant un temps pouvant aller de 2 heures à 24 heures

23. Procédé selon la revendication 22 caractérisé par le fait que l'on maintient le chauffage pendant 3 à 10 heures.

24. Procédé selon l'une des revendications 1 à 23 caractérisé par le fait que l'on effectue la filtration du précipité avant ou après refroidissement de la masse réactionnelle.

25. Procédé selon l'une des revendications 1 à 24 caractérisé par le fait que l'on effectue en outre un ou plusieurs lavages du gâteau de filtration avec de l'eau distillée ou permutée.

26. Procédé selon l'une des revendications 1 à 25 caractérisé par le fait que l'on effectue en outre un ou plusieurs lavages du gâteau de filtration avec un solvant organique.

27. Procédé selon l'une des revendications 25 et 26 caractérisé par le fait que l'on effectue de un à trois lavages.

28. Procédé selon l'une des revendications 1 à 27 caractérisé par le fait que l'on effectue un ou plusieurs lavages du gâteau de filtration avec une solution aqueuse d'ammoniaque.

29. Procédé selon la revendication 28 caractérisé par le fait que l'on effectue de un à dix lavages.

30. Procédé selon l'une des revendications 28 et 29 caractérisé par le fait que la solution aqueuse d'ammoniaque a une concentration variant entre 0,1 N et 1 N.

31. Procédé selon l'une des revendications 1 à 30 caractérisé par le fait que l'on effectue l'étape de séchage à l'air ou sous pression réduite de l'ordre de $10^{-2}$ à 100 mm de mercure (1,33 à $1,33.10^4$ Pa) à une température comprise entre 90°C et 200°C pendant une durée comprise entre 10 et 48 heures.

32. Procédé selon l'une des revendications 1 à 31 caractérisé par le fait que l'on effectue l'étape de calcination pendant une durée d'environ 30 minutes à 10 heures.

33. Procédé selon la revendication 32 caractérisé par le fait que la température de calcination est comprise entre 350°C et 450°C.

34. Oxyde cérique caractérisé par le fait qu'il présente une surfac spécifique déterminée selon la méthode BET d'au moins 130 m2/g après calcination à une température comprise entre 400 et 500°C.

35. Oxyde cérique selon la revendication 34 caractérisé par le fait quil présente une surface spécifique comprise entre 150 et 180 m2/g après calcination à une température comprise entre 400°C et 450°C.

36. Oxyde cérique selon la revendication 34 caractérisé par le fait que la quantité résiduelle d'ions sulfate exprimeé par le rapport molaire $[SO_4^=]/[Ce^{IV}]$ est inférieur à 0,30.

37. Oxyde cérique selon l'une des revendications 34 à 36 caractérisé par le fait que la quantité résiduelle d'ions sulfate exprimée par le rapport molaire $[SO_4^=]/[Ce^{IV}]$ est inférieure à 0,02.

38. Oxyde cérique selon l'une des revendications 34 à 37 caractérisé par le fait que la quantité résiduelle d'ions sulfate exprimée par le rapport molaire $[SO_4^=]/[Ce^{IV}]$ est inférieure à 0,002.

## Patentansprüche

1. Verfahren zur Darstellung eines Ceroxides mit einer nach der BET-Methode bestimmten spezifischen Oberfläche von mindestens 85 ± 5 m2/g, dadurch gekennzeichnet, daß
- ein basisches Cersulfat ausgefällt wird, indem eine wässrige Lösung eines Cer(IV)-Salzes und eine Sulfationen enthaltende, wässrige Lösung miteinander zur Reaktion gebracht werden; das Verhältnis zwischen der Molarität der Sulfationen und der sich ergebenden äquivalenten Konzentration von Cer(IV) liegt zwischen 0,01 und 1,4,
- der erhaltene Niederschlag filtriert
- und so mittels einer basischen Lösung gewaschen wird, daß die Menge verbleibender Sulfationen, dargestellt durch das Molverhältnis $[SO_4^=]/[Ce^{IV}]$, kleiner als 0,3 ist,
- gegebenenfalls der erhaltene Niederschlag getrocknet und
- bei einer Temperatur zwichen 300° und 500°C kalziniert wird.

2. Verfahren nach Patentanspruch 1, dadurch gekennzeichnet, daß die Cer(IV)-Salzlösung eine wässrige Cernitratlösung oder eine wässrige Cerammoniumnitratlösung ist.

3. Verfahren nach einem der Patentansprüche 1 und 2, dadurch gekennzeichnet, daß die Konzentration der Cersalzlösung zwischen 0,3 und 2 Mol Cer(IV) pro Liter beträgt.

4. Verfahren nach Patentanspruch 1, dadurch gekennzeichnet, daß die Sulfationen enthaltende wässrige Lösung eine Lösung eines Alkali- oder Erdalkalimetallsulfates oder von Ammoniumsulfat ist oder durch Einleitung eines schwefelhaltigen Gases in Wasser erhalten wird.

5. Verfahren nach Patentanspruch 4, dadurch gekennzeichnet, daß die genannte Lösung eine Ammoniumsulfatlösung ist.

6. Verfahren nach Patentanspruch 1, dadurch gekennzeichnet, daß die Sulfationen enthaltende, wässrige Lösung eine wassrige Schwefelsäurelösung ist.

7. Verfahren nach einem der Patentansprüche 1 bis 6, dadurch gekennzeichnet, daß das Wasser in der wässrigen Cer(IV)-Salzlösung und in der Sulfationen enthaltenden Lösung destilliertes oder deionisiertes Wasser ist.

8. Verfahren nach einem der Patentansprüche 1 bis 7, dadurch gekennzeichnet, daß das Reaktionsgemisch eine Säurestärke zwischen $10^{-2}$ und 1 N aufweist.

9. Verfahren nach Patentanspruch 8, dadurch gekennzeichnet, daß das Reaktionsgemisch eine Säurestärke zwischen 0,1 und 0,5 N aufweist.

10. Verfahren nach einem der Patentansprüche 8 und 9, dadurch gekennzeichnet, daß der saure Charakter durch den Anfang der Hydrolysereaktion herbeigeführt werden kann.

11. Verfahren nach einem der Patentansprüche 8 und 9, dadurch gekennzeichnet, daß der saure Charakter durch Salpetersäure oder durch Schwefelsäure herbeigeführt wird.

12. Verfahren nach einem der Patentansprüche 8 und 9, dadurch gekennzeichnet, daß der saure Charakter durch eine Cernitratlösung mit einer Säurestärke von 0,3 bis 5 N herbeigeführt wird.

13. Verfahren nach Patentanspruch 12, dadurch gekennzeichnet, daß die Cernitratlösung eine Säurestärke von 0,3 bis 1 N hat.

14. Verfahren nach einem der Patentansprüche 1 bis 13, dadurch gekennzeichnet, daß die Menge hinzugefügter Sulfationen so groß ist, daß das Verhältnis zwischen der Molarität der Sulfationen und der sich ergebende äquivalenten Konzentration von Cer(IV) zwischen 0,3 und 0,4 liegt.

15. Verfahren nach einem der Patentansprüche 1 bis 14, dadurch gekennzeichnet, daß das Verhältnis zwischen der wässrigen Cer(IV)-Salzlösung und der wässrigen Sulfationenlösung so ist, daß die sich ergebende äquivalente Konzentration von Cer(IV) zwischen 0,2 und 1,0 Mol/Liter liegt.

16. Verfahren nach Patentanspruch 15, dadurch gekennzeichnet, daß die äqivalente Konzentration von Cer(IV) zwischen 0,3 und 0,6 Mol/Liter liegt.

17. Verfahren nach einem der Patentansprüche 1 bis 16, dadurch gekennzeichnet, daß die Temperatur des Reaktionsgemisches ungefähr zwischen 70°C und 100°C liegt.

18. Verfahren nach Patentanspruch 17, dadurch gekennzeichnet, daß die Temperatur des Reaktionsgemisches die Temperatur seines Rückflusses ist.

19. Verfahren nach einem der Patentansprüche 1 bis 18, dadurch gekennzeichnet, daß die Sulfationen enthaltende wässrige Lösung auf die Temperatur des Reaktionsgemisches gebracht wird und schrittweise oder kontinuierlich die Cer(IV)-Salzlösung hinzugefügt wird.

20. Verfahren nach Patentanspruch 19, dadurch gekennzeichnet, daß das Hinzufügen der Cer(IV)-Salzlösung über einen Zeitraum zwischen 1 und 4 Stunden erfolgt.

21. Verfahren nach einem der Patentansprüche 1 bis 20, dadurch gekennzeichnet, daß gleichzeitig die wässrige Cer(IV)-Salzlösung und die Sulfationen enthaltende wassrige Lösung gemischt werden und daß die erhaltene Mischung bis zum Erreichen der Reaktionstemperatur erhitzt wird.

22. Verfahren nach einem der Patentansprüche 19 bis 21, dadurch gekennzeichnet, daß die Reifung des Reaktionsgemisches vor dem Filtrieren durch Aufrechterhaltung der Temperatur des Reaktionsgemisches während eines Zeitraumes, der 2 bis 24 Stunden dauern kann, durchgeführt wird.

23. Verfahren nach Patentanspruch 22, dadurch gekennzeichnet, daß die Beheizung während 3 bis 10 Stunden fortgesetzt wird.

24. Verfahren nach einem der Patentansprüche 1 bis 23, dadurch gekennzeichnet, daß das Abfiltrieren des Niederschlags vor oder nach Abkühlung des Reaktionsgemisches ausgeführt wird.

25. Verfahren nach einem der Patentansprüche 1 bis 24, dadurch gekennzeichnet, daß darüber hinaus der Filterkuchen ein- oder mehrmals mit destilliertem oder demineralisiertem Wasser gewaschen wird.

26. Verfahren nach einem der Patentansprüche 1 bis 25, dadurch gekennzeichnet, daß darüber hinaus der Filterkuchen ein- oder mehrmals mit einem organischen Lösungsmittel gewaschen wird.

27. Verfahren nach einem der Patentansprüche 25 und 26, dadurch gekennzeichnet, daß ein bis drei Waschungen durchgeführt werden.

28. Verfahren nach einem der Patentansprüche 1 bis 27, dadurch gekennzeichnet, daß der Filterkuchen ein- oder mehrmals mit einer wässrigen Ammoniaklösung gewaschen wird.

29. Verfahren nach Patentanspruch 28, dadurch gekennzeichnet, daß ein bis zehn Waschungen durchgeführt werden.

30. Verfahren nach einem der Patentansprüche 28 und 29, dadurch gekennzeichnet, daß die wässrige Ammoniaklösung eine Konzentration zwischen 0,1 N und 1 N hat.

31. Verfahren nach einem der Patentansprüche 1 bis 30, dadurch gekennzeichnet, daß die Trocknung an der Luft oder bei vermindertem Druck in der Größenordnung von $10^{-2}$ bis 100 mm Quecksilbersäule (1,33 bis 1,33 $10^4$ Pa) und bei einer Temperatur zwischen 90°C und 200°C während 10 bis 48 Stunden ausgeführt wird.

32. Verfahren nach einem der Patentansprüche 1 bis 31, dadurch gekennzeichnet, daß das Kalzinieren während ungefähr 30 Minuten bis 10 Stunden erfolgt.

33. Verfahren nach Patentanspruch 32, dadurch gekennzeichnet, daß die Temperatur der Kalzinierung zwischen 350°C und 450°C liegt.

34. Ceroxid, dadurch gekennzeichnet, daß es eine nach der BET-Methode bestimmte spezifische Oberfläche von mindestens 130 m²/g nach einer Kalzinierung bei einer Temperatur zwischen 400° und 500°C aufweist.

35. Ceroxid nach Patentanspruch 34, dadurch gekennzeichnet, daß es eine spezifische Oberfläche von 150 bis 180 m²/g nach einer Kalzinierung bei einer Temperatur zwischen 400°C und 450°C aufweist.

36. Ceroxid nach Patentanspruch 34, dadurch gekennzeichnet, daß die Menge verbleibender Sulfationen, dargestellt durch das Molverhältnis $[SO_4^=]/[Ce^{IV}]$, kleiner als 0,30 ist.

37. Ceroxid nach einem der Patentansprüche 34 bis 36, dadurch gekennzeichnet, daß die Menge verbleibender Sulfationen, dargestellt durch das Molverhältnis $[SO_4^=]/[Ce^{IV}]$, kleiner als 0,02 ist.

38. Ceroxid nach einem der Patentansprüche 34 bis 37, dadurch gekennzeichnet, daß die Menge verbleibender Sulfationen, dargestellt durch das Molverhältnis $[SO_4^=]/[Ce^{IV}]$, kleiner als 0,002 ist.

**Claims**

1. Process for the production of a ceric oxide having a specific surface area, determined according to the BET method, of at least 85 ± 5 m²/g, characterized in that it consists in:
- precipitating a basic ceric sulphate by reacting an aqueous cerium IV salt solution and an aqueous solution containing sulphate ions: the ratio between the molar concentration of sulphate ions and the equivalent final concentration of cerium IV varies between 0.01 and 1.4;

- filtering the precipitate obtained; washing it with a basic solution so that the residual quantity of sulphate ions expressed by the molar ratio $[CO_4^=]/[Ce^{IV}]$ is less than 0.3;
- optionally drying the precipitate obtained; and
- calcining it at a temperature of between 300 and 500°C.

2. Process according to Claim 1, characterized in that the cerium IV salt solution is an aqueous ceric nitrate solution or an aqueous ceric ammonium nitrate solution.

3. Process according to one of Claims 1 and 2, characterized in that the concentration of the cerium salt solution, expressed as cerium IV, is beteeen 0.3 and 2 moles per litre.

4. Process according to Claim 1, characterized in that the aqueous solution containing sulphate ions is a solution of an alkali metal sulphate, alkaline earth metal sulphate or ammonium sulphate or is obtained by bubbling a sulphur-containing gas through water.

5. Process according to Claim 4, characterized in that the said solution is an ammonium sulphate solution.

6. Process according to Claim 1, characterized in that the aqueous solution containing sulphate ions is an aqueous sulphuric acid solution.

7. Process according to one of Claims 1 to 6, characterized in that the water used in the aqueous cerium IV salt solutions and that containing the sulphate ions is distilled or deionized water.

8. Process according to one of Claims 1 to 7, characterized in that the reaction medium has an acidity ranging from $10^{-2}$ to 1 N.

9. Process according to Claim 8, characterized in that the reaction medium has an acidity of between 0.1 and 0.5 N.

10. Process according to one of Claims 8 and 9, characterized in that the acidity may be supplied by the beginning of the hydrolysis reaction.

11. Process according to one of Claims 8 and 9, characterized in that the acidity is supplied by nitric acid or sulphuric acid.

12. Process according to one of Claims 8 and 9, characterized in that the acidity is supplied by a ceric nitrate solution having an acidity of 0.3 to 5 N.

13. Process according to Claim 12, characterized in that the ceric nitrate solution has an acidity of 0.3 to 1 N.

14. Process according to one of Claims 1 to 13, characterized in that the quantity of sulphate ions added is such that the ratio between the molar concentration of sulphate ions and the equivalent final concentration of cerium IV varies between 0.3 and 0.4.

15. Process according to one of Claims 1 to 14, characterized in that the proportion between the aqueous cerium IV salt solution and the aqueous solution of sulphate ions is such that the equivalent final concentration of cerium IV is between 0.2 and 1.0 mol/litre.

16. Process according to Claim 15, characterized in that the equivalent concentration of cerium IV is between 0.3 and 0.6 mol/litre.

17. Process according to one of Claims 1 to 16, characterized in that the temperature of the reaction medium is approximately between 70°C and 100°C.

18. Process according to Claim 17, characterized in that the temperature of the reaction medium is its reflux temperature.

19. Process according to one of Claims 1 to 18, characterized in that the aqueous solution containing sulphate ions is heated to the temperature of the reaction medium and that the cerium IV salt solution is introduced gradually or continuously.

20. Process according to Claim 19, characterized in that the period over which the cerium IV salt solution is added is between 1 hour and 4 hours.

21. Process according to one of Claims 1 to 20, characterized in that the aqueous cerium IV salt solution and the aqueous solution containing the sulphate ions are simultaneously mixed and the mixture obtained is heated until the reaction temperature is obtained.

22. Process according to one of Claims 19 to 21, characterized in that the reaction mass is aged before the filtering operation, maintaining the temperature of the reaction medium for a period which may range from 2 hours to 24 hours.

23. Process according to Claim 22, characterized in that the heating is maintained for 3 to 10 hours.

24. Process according to one of Claims 1 to 23, characterized in that the precipitate is filtered before or after cooling the reaction mass.

25. Process according to one of Claims 1 to 24, characterized in that, in addition, one or more washings of the filter cake are carried out with distilled or deionized water.

26. Process according to one of Claims 1 to 25, characterized in that, in addition, one or more washings of the filter cake are carried out with an organic solvent.

27. Process according to one of Claims 25 and 26, characterized in that one to three washings are carried out.

28. Process according to one of Claims 1 to 27, characterized in that one or more washings of the filter cake are carried out with an aqueous solution of liquid ammonia.

29. Process according to Claim 28, characterized in that one to ten washings are carried out.

30. Process according to one of Claims 28 and 29, characterized in that the aqueous solution of liquid ammonia has a concentration varying between 0.1 N and 1 N.

31. Process according to one of Claims 1 to 30, characterized in that the drying stage is carried out in air or under reduced pressure of the order of $10^{-2}$ to 100 mm of mercury (1.33 to 1.33 x $10^4$Pa), at a temperature of between 90°C and 200°C for a period of between 10 and 48 hours.

32. Process according to one of Claims 1 to 31, characterized in that the calcination stage is carried out for a period of approximately 30 minutes to 10 hours.

33. Process acording to Claim 32, characterized in that the calcination temperature is between 350°C and 450°C.

34. Ceric oxide characterized in that it has a specific surface area, determined according to the BET method, of at least 130 m2/g after calcination at a temperature of between 400 and 500°C.

35. Ceric oxide according to Claim 34, characterized in that it has a specific surface area of between 150 and 180 m2/g after calcination at a temperature of between 400°C and 450°C.

36. Ceric oxide according to Claim 34, characterized in that the residual quantity of sulphate ions expressed by the molar ratio $[SO_4^=]/[Ce^{IV}]$ is less than 0.30.

37. Ceric oxide according to one of Claims 34 to 36, characterized in that the residual quantity of sulphate ions expressed by the molar ratio $[SO_4^=]/[Ce^{IV}]$ is less than 0.02.

38. Ceric oxide according to one of Claims 34 to 37, characterized in that the residual quantity of sulphate ions expressed by the molar ratio $[SO_4^=]/[Ce^{IV}]$ is less than 0.002.

Figure 1

100 μm

Figure 2

1 μm